# EUROPEAN PATENT APPLICATION

(11) **EP 4 851 482 A1**
(43) Date of publication of application: **09.12.2026**
(21) Application number: 24922355.3
(22) Date of filing: 30.01.2024
(51) Int. Cl.: F16F 1/06

(54) **SPRING**

(71) Applicant: Nabeya Bi-Tech Kabushiki Kaisha, Seki-shi, Gifu 501-3939 (JP)
(72) Inventor: IWAI, Kohichi, Seki-shi, Gifu 501-3939 (JP); MAMIYA, Hisaaki, Seki-shi, Gifu 501-3939 (JP)
(74) Representative: Westphal, Mussgnug & Partner Patentanwälte mbB
(86) International application number: PCT/JP2024/002757
(87) International publication number: WO 2025/163720

(57) **Abstract**

A spring includes an annular peripheral wall. The peripheral wall includes multiple slit groups formed at intervals in the axial direction of the peripheral wall. Each slit group includes multiple first slits extending in the circumferential direction of the peripheral wall and formed at an interval in the circumferential direction. Multiple second slits are formed at intervals in the circumferential direction. Each second slit connects respective first slits of two of the slit groups adjacent to each other in the axial direction. The peripheral wall includes multiple pairs of opposing surfaces. The opposing surfaces of each pair face each other across a corresponding one of the second slits in the circumferential direction. Each of the opposing surfaces intersects the axial direction.

## Description

### TECHNICAL FIELD

The present disclosure relates to a spring.

### BACKGROUND ART

As shown in Fig. 20, Patent Literature 1 discloses a hollow cylindrical spring having an annular peripheral wall 111.

The peripheral wall 111 includes multiple slit groups 112 formed at intervals in the axial direction of the peripheral wall 111. Each slit group 112 includes two first slits 113 extending in the circumferential direction of the peripheral wall 111 and formed at an interval in the circumferential direction. The peripheral wall 111 includes multiple second slits 114, each of which connects first slits 113 of two slit groups 112 adjacent to each other in the axial direction.

The peripheral wall 111 includes multiple pairs of opposing surfaces 115. The opposing surfaces 115 of each pair face each other across a corresponding one of the second slits 114 in the circumferential direction. The opposing surfaces 115 are parallel to each other and extend in the axial direction.

The spring 110 expands and contracts as the widths of the first slits 113 in the axial direction increase and decrease.

### CITATION LIST

### Patent Literature

Patent Document 1: Japanese Registered Design No. 1226279

### SUMMARY OF INVENTION

### Technical Problem

During operations such as attaching a spring to an apparatus in a factory or the like or moving an apparatus to which the spring is attached, handling efficiency may be reduced due to expansion and contraction of the spring. Further, during transportation of the spring, such as at the time of shipment of the spring, an excessive external force may act on the spring, thereby plastically deforming the spring and changing characteristics of the spring. For this reason, it is desirable to suppress deformation of the spring in the axial direction when the spring is not in use.

### Solution to Problem

Various aspects of the spring for solving the above-described problem will be described.

[Aspect 1] A spring, comprising an annular peripheral wall, in which the peripheral wall includes: multiple slit groups formed at intervals in an axial direction of the peripheral wall, each of the slit groups including multiple first slits extending in a circumferential direction of the peripheral wall and formed at intervals in the circumferential direction; multiple second slits each connecting corresponding first slits of two of the slit groups adjacent to each other in the axial direction, the second slits being formed at intervals in the circumferential direction; and multiple pairs of opposing surfaces, the opposing surfaces of each pair facing each other across a corresponding one of the second slits in the circumferential direction, and each of the opposing surfaces intersects the axial direction.

The spring expands and contracts as the widths of the first slits in the axial direction increase and decrease. At this time, the opposing surfaces of each pair, which face each other across the corresponding second slit, move toward the opposite sides in the axial direction.

According to the above configuration, the opposing surfaces of each pair intersect the axial direction. Therefore, by inserting into each of the second slits a rod-shaped member having the same cross-sectional shape as the second slit and whose movement is restricted, the two opposing surfaces become caught on the rod-shaped member from at least one side in the axial direction. This restricts the two opposing surfaces from moving toward the rod-shaped member in the axial direction. Accordingly, inserting the rod-shaped member into each second slit suppresses at least one of expansion and contraction of the spring when the spring is not in use.

[Aspect 2] The spring according to [Aspect 1], in which each of the opposing surfaces includes a recessed surface, and each second slit includes: a first region in which a distance between the two recessed surfaces facing each other is a first distance; and second regions located on opposite sides of the first region in the axial direction, a distance between the two recessed surfaces in each of the second regions being a second distance less than the first distance.

According to the above configuration, the second regions are located on the opposite sides of the first region in the axial direction between the two recessed surfaces. The second distance between the two recessed surfaces in each second region is less than the first distance between the two recessed surfaces in the first region. Therefore, by inserting into each of the second slits a rod-shaped member having the same cross-sectional shape as the second slit and whose movement is restricted, each of the two recessed surfaces becomes caught on the rod-shaped member from the opposite sides in the axial direction. This restricts movement of the two opposing surfaces toward the opposite sides in the axial direction. Accordingly, by inserting a rod-shaped member into each second slit, expansion and contraction of the spring, when the spring is not in use, are suppressed.

[Aspect 3] The spring according to [Aspect 2], in which the recessed surfaces of each pair are arcuately curved along a same imaginary circle centered on a central axis that is orthogonal to the axial direction and extends through a corresponding one of the second slits.

According to the above configuration, when a cylindrical rod-shaped member having the same diameter as the imaginary circle is inserted into each of the second slits in order to suppress expansion and contraction of the spring, there is no need to adjust the rotational phase of the rod-shaped member. Therefore, the rod-shaped member can be readily inserted into the second slit. Accordingly, expansion and contraction of the spring, when the spring is not in use, are readily suppressed.

[Aspect 4] The spring according to [Aspect 1], in which each of the opposing surfaces includes a recessed surface, and the recessed surfaces of each pair facing each other are arcuately curved along a same imaginary circle centered on a central axis that is orthogonal to the axial direction and extends through a corresponding one of the first slits.

According to the above configuration, by inserting the rod-shaped member into each of the second slits, each of the two recessed surfaces becomes caught on the rod-shaped member from one side in the axial direction. This restricts the two opposing surfaces, which move toward the opposite sides in the axial direction during expansion and contraction of the spring, from moving toward the rod-shaped member in the axial direction. Accordingly, by inserting a rod-shaped member into each second slit, expansion and contraction of the spring, when the spring is not in use, are suppressed.

Further, according to the above configuration, when a cylindrical rod-shaped member having the same diameter as the imaginary circle is inserted into each of the second slits in order to suppress expansion and contraction of the spring, there is no need to adjust the rotational phase of the rod-shaped member. Therefore, the rod-shaped member can be readily inserted into the second slit. Accordingly, expansion and contraction of the spring, when the spring is not in use, are readily suppressed.

[Aspect 5] The spring according to [Aspect 2], in which the recessed surfaces of each pair are arcuately curved along respective ones of two imaginary circles having a same diameter, each of the imaginary circles being centered on a central axis that is orthogonal to the axial direction and extends through a corresponding one of the second slits.

With the above configuration, by inserting into each of the second slits a rod-shaped member having the same cross-sectional shape as the second slit and whose movement is restricted, each of the two recessed surfaces becomes caught on the rod-shaped member from the opposite sides in the axial direction. This restricts movement of the two opposing surfaces toward the opposite sides in the axial direction. Accordingly, by inserting a rod-shaped member into each second slit, expansion and contraction of the spring, when the spring is not in use, are suppressed.

[Aspect 6] The spring according to [Aspect 1], in which each of the opposing surfaces includes a recessed surface, and the recessed surfaces of each pair facing each other are arcuately curved along respective ones of two imaginary circles having a same diameter, each of the imaginary circles being centered on a central axis that is orthogonal to the axial direction and extends through a corresponding one of the first slits.

With the above configuration, by inserting into each of the second slits a rod-shaped member having the same cross-sectional shape as the second slit and whose movement is restricted, each of the two recessed surfaces becomes caught on the rod-shaped member from one side in the axial direction. This restricts the two opposing surfaces, which move toward the opposite sides in the axial direction during expansion and contraction of the spring, from moving toward the rod-shaped member in the axial direction. Accordingly, by inserting a rod-shaped member into each second slit, expansion and contraction of the spring, when the spring is not in use, are suppressed.

[Aspect 7] The spring according to [Aspect 1], in which each of the opposing surfaces includes a recessed surface, and the facing recessed surfaces of each pair are arcuately curved respectively along a first imaginary circle and a second imaginary circle, the first imaginary circle being centered on a central axis that is orthogonal to the axial direction and extends through a corresponding one of the first slits, and the second imaginary circle having the same diameter as the first imaginary circle and being centered on a central axis that is orthogonal to the axial direction and extends through a corresponding one of the second slits.

According to the above configuration, by inserting into each of the second slits a rod-shaped member having the same cross-sectional shape as the second slit and whose movement is restricted, the recessed surface along the first imaginary circle becomes caught on the rod-shaped member from one side in the axial direction. Further, the recessed surface along the second imaginary circle becomes caught on the rod-shaped member from the opposite sides in the axial direction. This restricts the recessed surface along the first imaginary circle from moving toward the rod-shaped member in the axial direction. Also, the recessed surface along the second imaginary circle is restricted from moving toward the opposite sides in the axial direction. Accordingly, by inserting a rod-shaped member into each second slit, expansion and contraction of the spring, when the spring is not in use, are suppressed.

[Aspect 8] The spring according to [Aspect 1], in which each of the opposing surfaces includes a recessed surface, and the recessed surfaces of each pair facing each other are arcuately curved along respective ones of two imaginary circles having a same diameter, the imaginary circles being respectively centered on central axes that are orthogonal to the axial direction and extend through two of the first slits connected to each other by a corresponding one of the second slits.

According to the above configuration, by inserting into each of the second slits a rod-shaped member having the same cross-sectional shape as the second slit and whose movement is restricted, the two recessed surfaces become caught on the rod-shaped member from the opposite sides in the axial direction. This restricts the two opposing surfaces, which move toward the opposite sides in the axial direction during contraction of the spring, from moving toward the rod-shaped member in the axial direction. Accordingly, by inserting a rod-shaped member into each second slit, contraction of the spring when the spring is not in use is suppressed.

[Aspect 9] The spring according to [Aspect 1], in which each of the opposing surfaces includes a projecting surface, and each second slit includes: a first region in which a distance between the two projecting surfaces facing each other is a first distance; and second regions located on opposite sides of the first region in the axial direction, a distance between the two projecting surfaces in each of the second regions being a second distance greater than the first distance.

According to the above configuration, the second regions are located on the opposite sides of the first region in the axial direction between the two projecting surfaces. The second distance between the two projecting surfaces in each second region is greater than the first distance between the two projecting surfaces in the first region. Therefore, by inserting into each of the second slits a rod-shaped member having the same cross-sectional shape as the second slit and whose movement is restricted, each of the two projecting surfaces becomes caught on the rod-shaped member from the opposite sides in the axial direction. This restricts movement of the two opposing surfaces toward the opposite sides in the axial direction. Accordingly, by inserting a rod-shaped member into each second slit, expansion and contraction of the spring, when the spring is not in use, are suppressed.

[Aspect 10] The spring according to [Aspect 1], in which one of the opposing surfaces of each pair includes a recessed surface, the other of the opposing surfaces includes a projecting surface facing the recessed surface, and each second slit includes a region in which a distance between the recessed surface and the projecting surface facing each other is constant over an entirety of the region in the axial direction.

According to the above configuration, the distance between the recessed surface and the projecting surface is constant over the entirety in the axial direction. Therefore, by inserting into each of the second slits a rod-shaped member having the same cross-sectional shape as the second slit and whose movement is restricted, the recessed surface and the projecting surface of the two opposing surfaces become caught on the rod-shaped member from the opposite sides in the axial direction. This restricts movement of the two opposing surfaces toward the opposite sides in the axial direction. Accordingly, by inserting a rod-shaped member into each second slit, expansion and contraction of the spring, when the spring is not in use, are suppressed. Advantageous Effects of Invention

According to the present disclosure, deformation of the spring in the axial direction when the spring is not in use is suppressed.

### BRIEF DESCRIPTION OF DRAWINGS

[Fig. 1] Fig. 1 is a perspective view illustrating a spring according to one embodiment.
[Fig. 2] Fig. 2 is a front view of the spring shown in Fig. 1.
[Fig. 3] Fig. 3 is a cross-sectional view taken along line 3-3 of Fig. 2.
[Fig. 4] Fig. 4 is a cross-sectional view taken along line 4-4 of Fig. 2.
[Fig. 5] Fig. 5 is an enlarged front view showing a second slit of the spring shown in Fig. 1.
[Fig. 6] Fig. 6 is a front view of the spring shown in Fig. 1 in an expanded state.
[Fig. 7] Fig. 7 is a front view of the spring shown in Fig. 1 in a contracted state.
[Fig. 8] Fig. 8 is a front view showing a state in which a rod-shaped member is inserted into a second slit of the spring shown in Fig. 1.
[Fig. 9] Fig. 9 is a front view showing a second slit according to a first modification.
[Fig. 10] Fig. 10 is a front view showing a second slit according to a second modification.
[Fig. 11] Fig. 11 is a front view showing a second slit according to a third modification.
[Fig. 12] Fig. 12 is a front view showing a second slit according to a fourth modification.
[Fig. 13] Fig. 13 is a front view showing a second slit according to a fifth modification.
[Fig. 14] Fig. 14 is a front view showing a second slit according to a sixth modification.
[Fig. 15] Fig. 15 is a front view showing a second slit according to a seventh modification.
[Fig. 16] Fig. 16 is a front view showing a second slit according to an eighth modification.
[Fig. 17] Fig. 17 is a front view showing a second slit according to a ninth modification.
[Fig. 18] Fig. 18 is a front view showing a second slit according to a tenth modification.
[Fig. 19] Fig. 19 is a front view showing a second slit according to an eleventh modification.

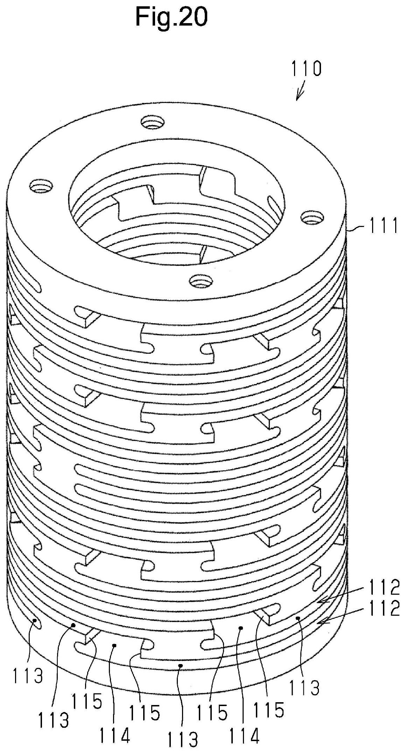

[Fig. 20] Fig. 20 is a perspective view showing a typical spring.

### DESCRIPTION OF EMBODIMENTS

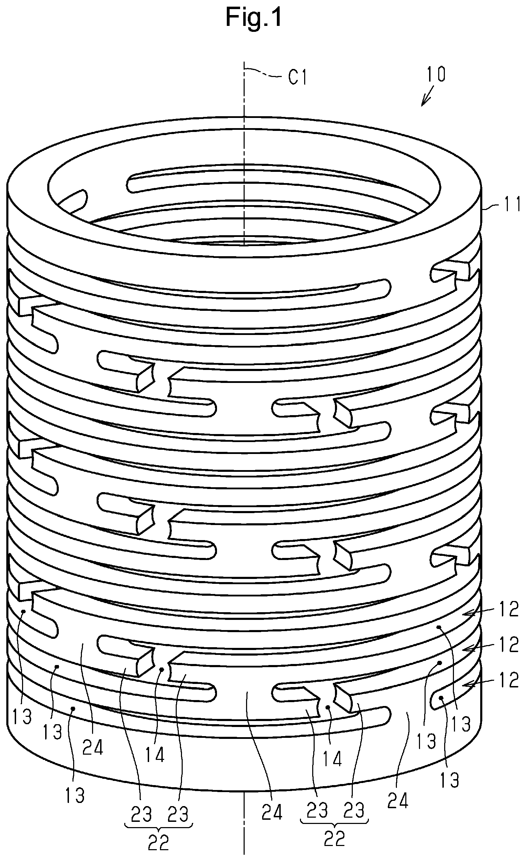

A spring according to an embodiment will now be described with reference to Figs. 1 to 8. The term "annular" as used in this description may refer to any structure that forms a loop, or a continuous shape with no ends, as well as a generally loop-shaped structure with a gap, such as a C-shape. "Annular" shapes include but are not limited to a circular shape, an elliptic shape, and a polygonal shape with sharp or rounded corners.

As illustrated in Fig. 1, a spring 10 has a tubular shape and has an annular peripheral wall 11. In the present embodiment, the peripheral wall 11 is circular as viewed in the axial direction. The spring 10 is formed of a metal material.

Hereinafter, the direction along a central axis C1 of the peripheral wall 11 will be referred to as an axial direction. Further, a circumferential direction of the peripheral wall 11 about the central axis C1 will be referred to simply as a circumferential direction. Further, a radial direction of the peripheral wall 11 about the central axis C1 will be referred to simply as a radial direction.

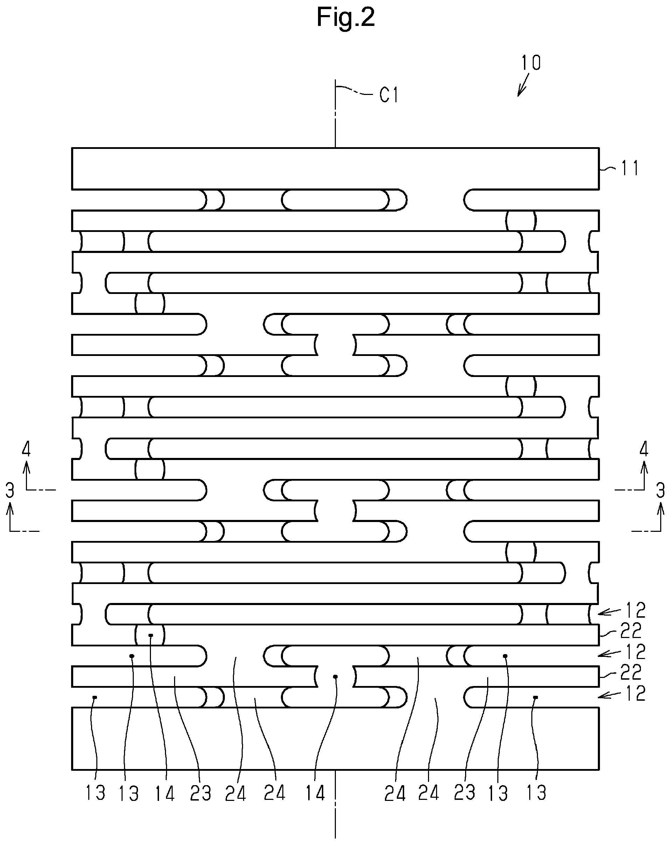

As illustrated in Figs. 1 and 2, the peripheral wall 11 has multiple slit groups 12 formed at intervals in the axial direction. Each slit group 12 has multiple first slits 13 extending in the circumferential direction and formed at intervals in the circumferential direction. Each first slit 13 extends through the peripheral wall 11 in the radial direction. The width of each first slit 13 in the axial direction is constant over the entirety in the circumferential direction.

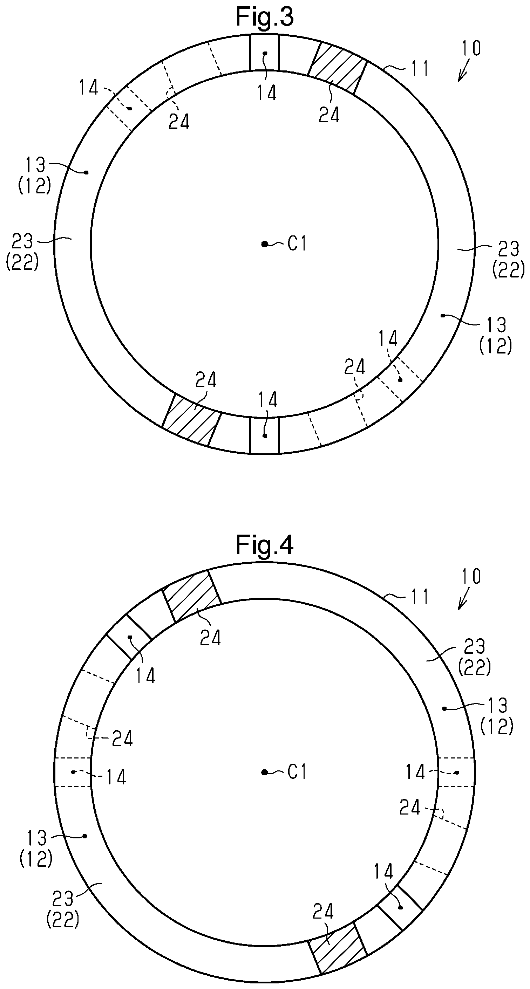

As illustrated in Figs. 3 and 4, each slit group 12 has, for example, two first slits 13. The slit groups 12 are formed at intervals in the axial direction in a state in which their phases are shifted by 45° toward one side in the circumferential direction. Accordingly, phases of two first slits 13 adjacent to each other in the axial direction are shifted by 45° in the circumferential direction.

As illustrated in Figs. 1 and 2, the peripheral wall 11 has multiple second slits 14. Each second slit 14 extends through the peripheral wall 11 in the radial direction. Each second slit 14 connects the first slits 13 of two slit groups 12 adjacent to each other in the axial direction. Two slit groups 12 adjacent to each other in the axial direction are connected to each other via two second slits 14 located on opposite sides from each other in the radial direction with the central axis C1 located therebetween.

Each second slit 14 connects end portions of two first slits 13 adjacent to each other in the axial direction. Two second slits 14 connected to the opposite end portions of each first slit 13 extend toward the opposite sides in the axial direction from the first slit 13.

The peripheral wall 11 includes multiple leaf spring portions 22 formed at intervals in the axial direction. A slit group 12 is formed between two leaf spring portions 22 adjacent to each other in the axial direction. Each leaf spring portion 22 includes multiple arcuate portions 23 extending in an arcuate shape in the circumferential direction and facing each other in the circumferential direction with a gap therebetween.

As illustrated in Figs. 3 and 4, each leaf spring portion 22 has, for example, two arcuate portions 23. The leaf spring portions 22 are formed at intervals in the axial direction in a state in which their phases are shifted by 45° toward one side in the circumferential direction. Accordingly, phases of two arcuate portions 23 adjacent to each other in the axial direction are shifted by 45° in the circumferential direction.

The peripheral wall 11 includes multiple connecting portions 24. Each connecting portion 24 connects the arcuate portions 23 of two leaf spring portions 22 adjacent to each other in the axial direction. Two leaf spring portions 22 adjacent to each other in the axial direction are connected to each other via two connecting portions 24 located on opposite sides from each other in the radial direction with the central axis C1 interposed therebetween.

Each connecting portion 24 connects end portions of two arcuate portions 23 adjacent to each other in the axial direction. Two connecting portions 24 connected to the opposite end portions of each arcuate portion 23 extend toward the opposite sides in the axial direction from the arcuate portion 23. The opposite end portions of each arcuate portion 23 extend in a cantilevered manner in the circumferential direction from the connecting portion 24.

The two first slits 13 of each slit group 12 are formed by gaps between two leaf spring portions 22 adjacent to each other in the axial direction and two connecting portions 24 connecting the two leaf spring portions 22. The two second slits 14 are formed by gaps between the two arcuate portions 23 adjacent to each other in the circumferential direction.

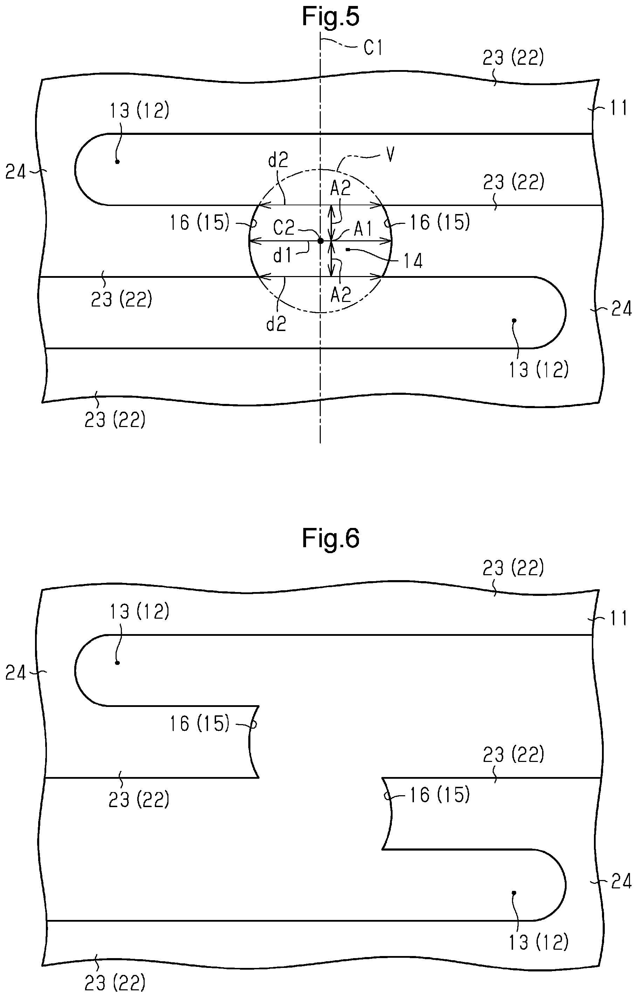

As illustrated in Fig. 5, each arcuate portion 23 has, at the opposite end portions in the circumferential direction, opposing surfaces 15 facing the end portion of the other arcuate portion 23. Each leaf spring portion 22 has four opposing surfaces 15 in total. The opposing surfaces 15 form a second slit 14.

Each of the two opposing surfaces 15 facing each other across each second slit 14, which may simply be referred to as two opposing surfaces 15, includes a recessed surface 16. In the present embodiment, the entirety of each opposing surface 15 is the recessed surface 16. The two recessed surfaces 16 of the two opposing surfaces 15 face each other in the circumferential direction. Each recessed surface 16 extends over the entirety of the arcuate portion 23 in the radial direction. Accordingly, each recessed surface 16 is continuous with the outer peripheral surface and the inner peripheral surface of the arcuate portion 23.

The two recessed surfaces 16 intersect the axial direction. Specifically, the two recessed surfaces 16 are arcuately curved along the same imaginary circle V centered on a central axis C2 that is orthogonal to the axial direction and extends through the second slit 14. The two recessed surfaces 16 are located on a circumference of the same imaginary circle V. The central axis C2 of the imaginary circle V is a straight line that extends in the radial direction and extends through the center of the second slit 14 in the axial direction. Also, the central axis C2 intersects the central axis C1 of the peripheral wall 11. The diameter of the imaginary circle V is greater than the width of the arcuate portion 23 in the axial direction and less than the sum of the width of the arcuate portion 23 in the axial direction and widths of two first slits 13 adjacent to the arcuate portion 23.

Each second slit 14 has a first region A1 and two second regions A2 located on the opposite sides of the first region A1 in the axial direction. The first region A1 is a region in which the distance between the two recessed surfaces 16 facing each other is a first distance d1. Each second region A2 is a region in which the distance between the two recessed surfaces 16 is a second distance d2, which is less than the first distance d1. The first distance d1 is the distance between the most recessed parts of the two recessed surfaces 16. The second distance d2 is a distance between parts of the two recessed surfaces 16 other than the most recessed parts. Any region of the second slit 14 other than the first region A1 may serve as a second region A2. The farther from the first region A1 in the axial direction, the smaller the second distance d2 becomes. Fig. 5 shows the minimum second distances d2 for illustrative purposes.

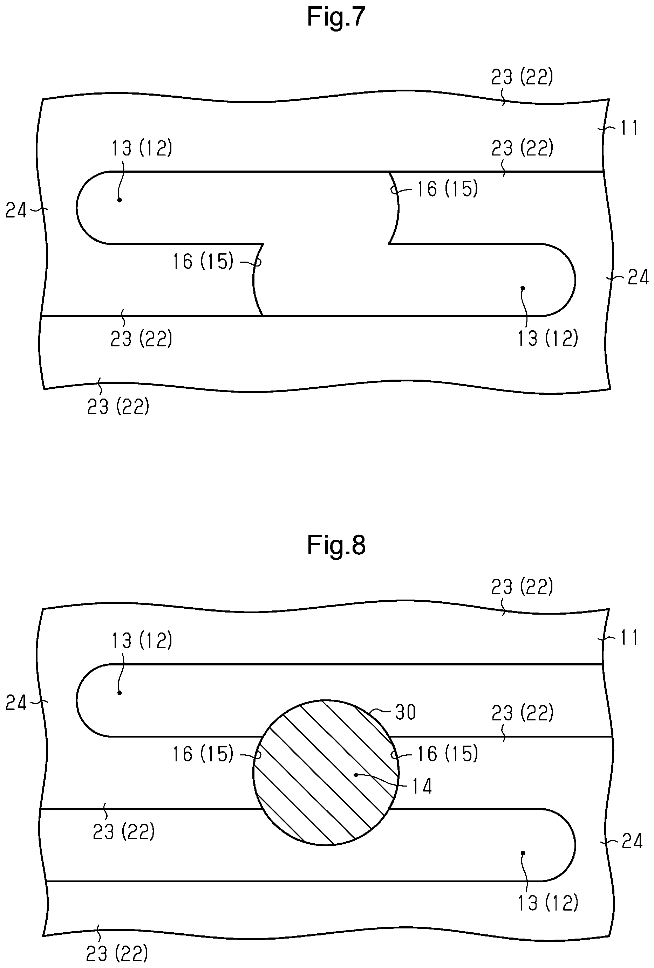

As illustrated in Figs. 6 and 7, the spring 10 expands and contracts as each arcuate portion 23 elastically deforms in the axial direction from the connecting portion 24. When the spring 10 expands, the width of each first slit 13 increases as the arcuate portions 23 deform move away from each other in the axial direction. When the spring 10 contracts, the width of each first slit 13 decreases as the arcuate portions 23 deform so as to move toward each other in the axial direction. Of each arcuate portion 23, a part extending in a cantilevered manner in the circumferential direction from the connecting portion 24 does not elastically deform during expansion and contraction of the spring 10 and therefore does not contribute to expansion and contraction of the spring 10.

### <Operation of the Present Embodiment>

The spring 10 expands and contracts as the widths of the first slits 13 in the axial direction increase and decrease. At this time, the opposing surfaces 15 of each pair, which face each other across the corresponding second slit 14, move toward the opposite sides in the axial direction.

In the spring 10 of the present embodiment, the two opposing surfaces 15 of each pair include a recessed surface 16, respectively. The second regions A2 are located on the opposite sides of the first region A1 in the axial direction between the two recessed surfaces 16. The second distance d2 between the two recessed surfaces 16 in the second regions A2 is less than the first distance d1 between the two recessed surfaces 16 in the first region A1. Therefore, as illustrated in Fig. 8, by inserting into the second slit 14 a cylindrical rod-shaped member 30 having the same diameter as the imaginary circle V illustrated in Fig. 5 and whose movement is restricted, each of the two recessed surfaces 16 becomes caught on the rod-shaped member 30 from the opposite sides in the axial direction. This restricts movement of the two opposing surfaces 15 toward the opposite sides in the axial direction.

### <Advantages of Present Embodiment>

(1) The two opposing surfaces 15 of each pair, which face each other across the corresponding second slit 14, include the recessed surfaces 16, respectively. Each second slit 14 has a first region A1 and second regions A2 located on the opposite sides of the first region A1 in the axial direction.
   According to the above configuration, by inserting the rod-shaped member 30 into each second slit 14, expansion and contraction of the spring 10 when the spring 10 is not in use are suppressed.
(2) The two recessed surfaces 16, which face each other, are arcuately curved along the same imaginary circle V.

According to the above configuration, when the cylindrical rod-shaped member 30, which has the same diameter as the imaginary circle V is inserted into each second slit 14, there is no need to adjust the rotational phase of the rod-shaped member 30. Therefore, the rod-shaped member 30 can be readily inserted into the second slit 14. Accordingly, expansion and contraction of the spring 10 when the spring 10 is not in use is readily suppressed.

### <Modifications>

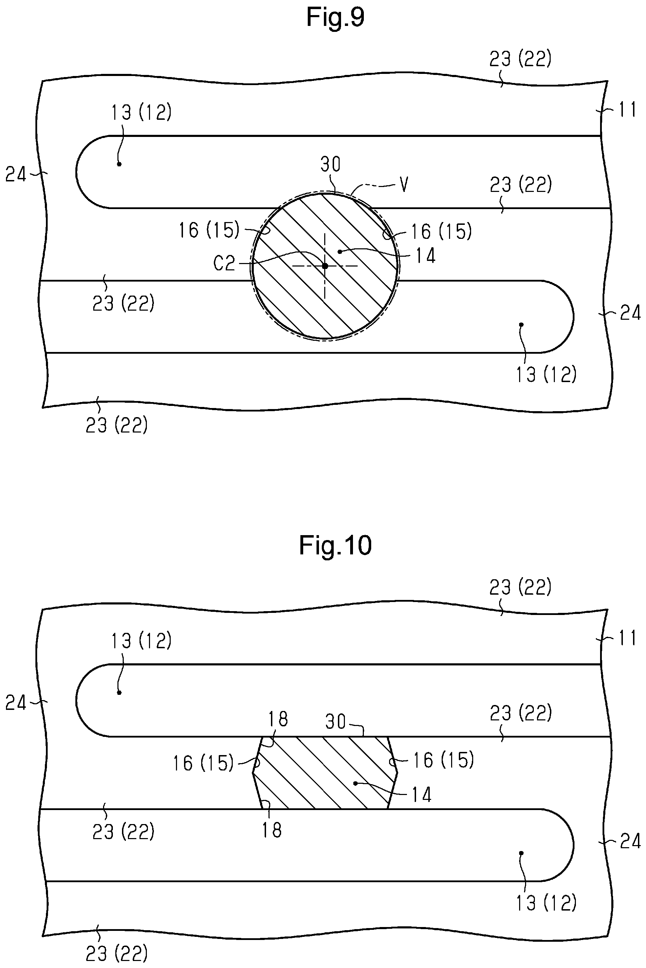

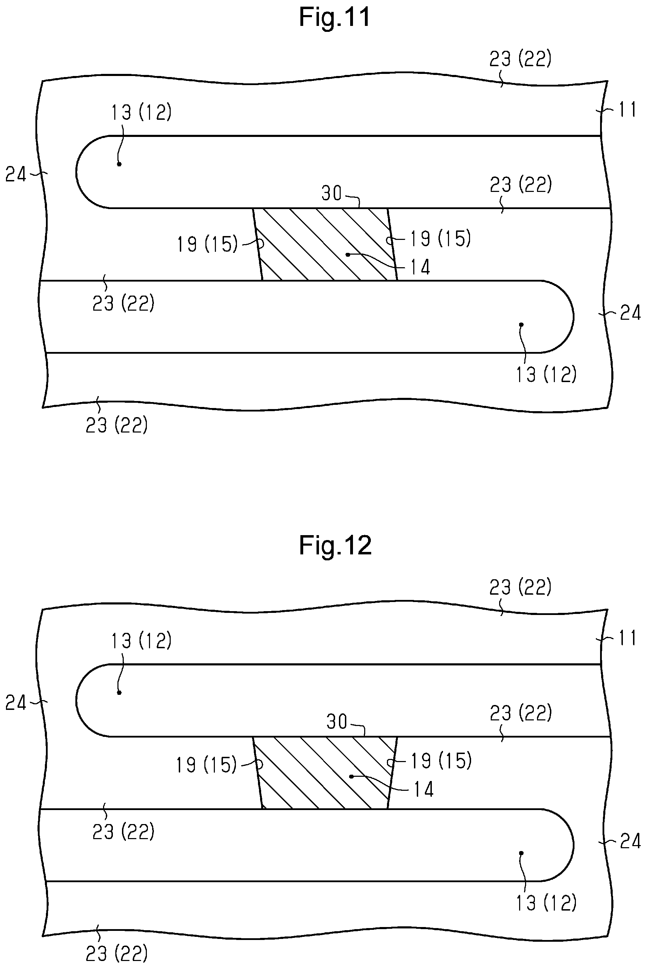

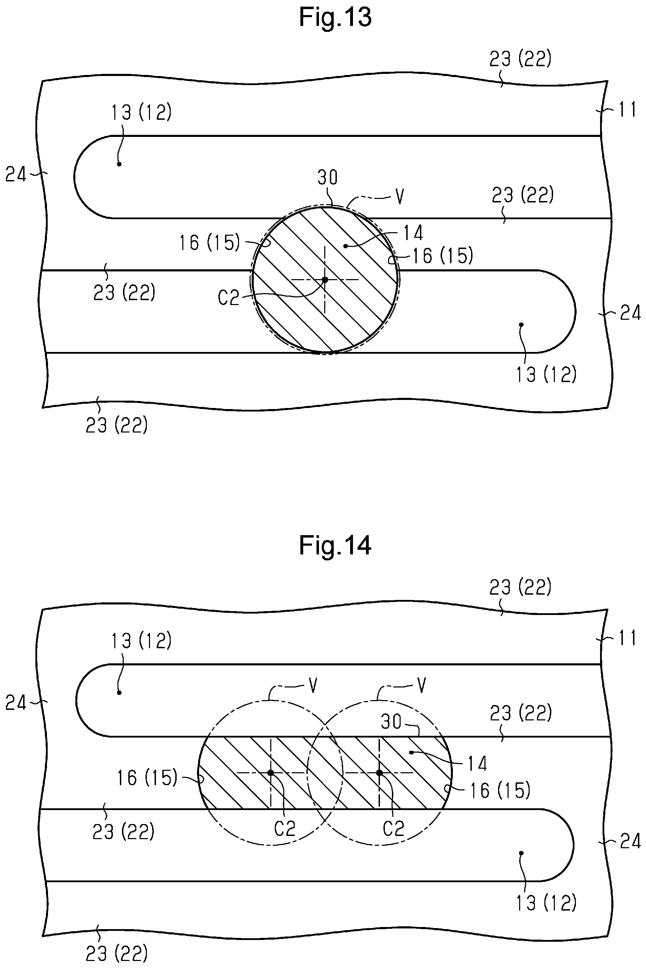

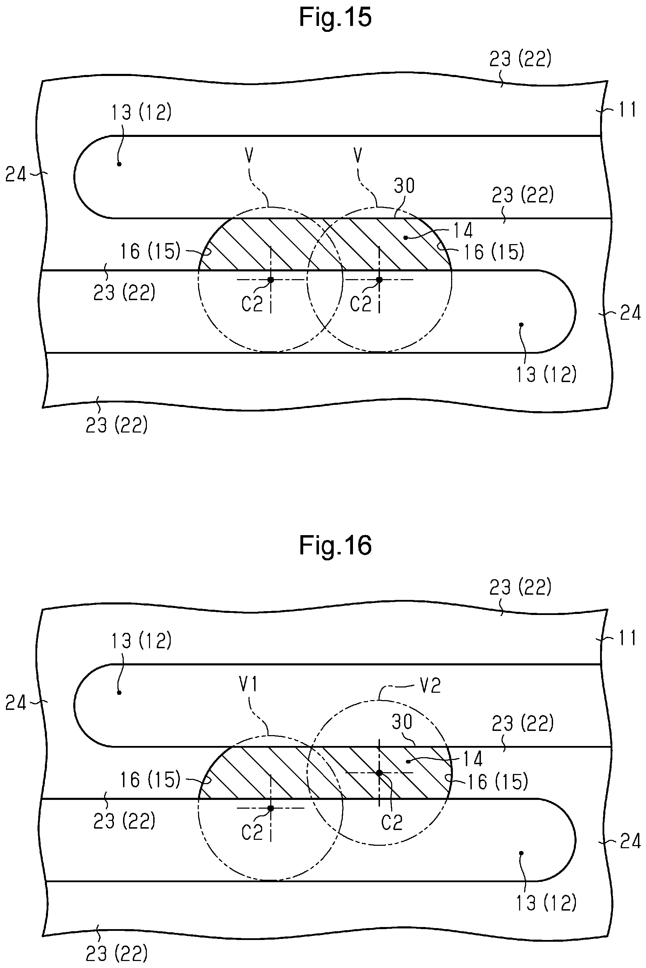

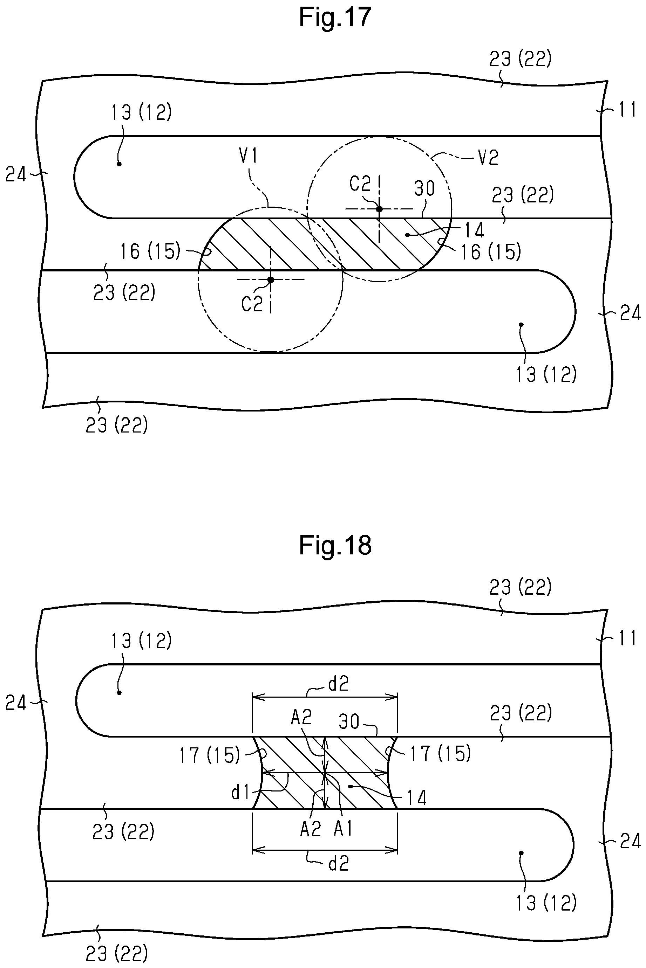

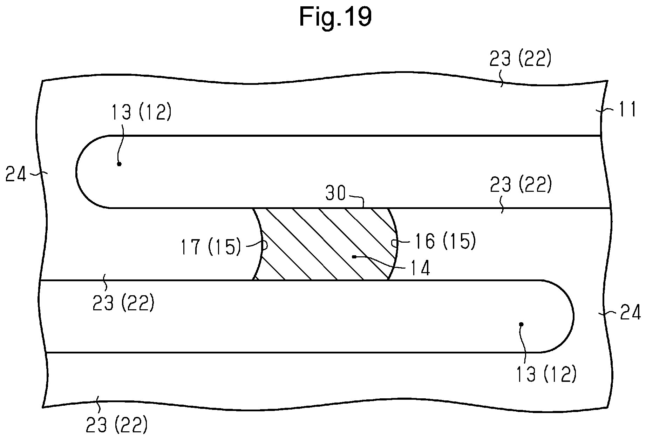

The above-described embodiment may be modified as follows. The above-described embodiment and the following modifications can be combined as long as the combined modifications remain technically consistent with each other.
- As illustrated in Fig. 9, the central axis C2 of the imaginary circle V may extend, within the second slit 14, through a position offset from the center of the second slit 14 in the axial direction toward one side in the axial direction. In Fig. 9, the diameter of the imaginary circle V is illustrated as being greater than the diameter of the rod-shaped member 30 for illustrative purposes. Even with such a configuration, it is possible to achieve an advantage similar to the advantage (1).
- As illustrated in Fig. 10, each recessed surface 16 may be recessed in a V-shape. In this case, each recessed surface 16 is formed by a pair of inclined surfaces 18 that intersect the axial direction. Even with such a configuration, it is possible to achieve an advantage similar to the advantage (1).
- The opposing surface 15 is not limited to one including the recessed surface 16. The shape of the opposing surface 15 may be any shape as long as the opposing surface 15 intersects the axial direction. For example, the opposing surface 15 may include a single inclined surface 19 inclined relative to the axial direction. In this case, as illustrated in Fig. 11, the two inclined surfaces 19 of each pair, which face each other, may be parallel to each other. Further, as illustrated in Fig. 12, the two inclined surfaces 19 of each pair, which face each other, may be inclined relative to the axial direction so as to become closer to each other toward one side in the axial direction. According to these configurations, by inserting into each second slit 14 a rod-shaped member 30 having the same cross-sectional shape as the second slit 14 and whose movement is restricted, the two opposing surfaces 15 become caught on the rod-shaped member 30 from one side or the other in the axial direction. This restricts the two opposing surfaces 15 from moving toward the rod-shaped member 30 in the axial direction. Accordingly, inserting the rod-shaped member 30 into each second slit 14 suppresses at least one of expansion and contraction of the spring 10 when the spring 10 is not in use.
- As shown in Fig. 13, the two recessed surfaces 16 may be arcuately curved along the same imaginary circle V centered on the central axis C2 that is orthogonal to the axial direction and extends through the first slit 13. The two recessed surfaces 16 are located on a circumference of the same imaginary circle V. The radius of the imaginary circle V in the present modification is greater than the width of the arcuate portion 23. According to this configuration, by inserting into each second slit 14 a cylindrical rod-shaped member 30 having the same diameter as the imaginary circle V and whose movement is restricted, each of the two recessed surfaces 16 becomes caught on the rod-shaped member 30 from one side in the axial direction. This restricts the two opposing surfaces 15, which move toward the opposite sides in the axial direction during expansion and contraction of the spring 10, from moving toward the rod-shaped member in the axial direction. Accordingly, inserting the rod-shaped member 30 into each second slit 14 suppresses expansion and contraction of the spring 10 when the spring 10 is not in use. Even with such a configuration, it is possible to achieve an advantage similar to the advantage (2). A portion of the rod-shaped member 30 is located inside the two first slits 13 connected to the second slit 14. Accordingly, contraction of the spring 10 can also be suppressed by contact between the rod-shaped member 30 and the inner surfaces of the first slits 13 when the spring 10 contracts. In Fig. 13, the diameter of the imaginary circle V is illustrated as being greater than the diameter of the rod-shaped member 30 for illustrative purposes.
- As shown in Fig. 14, the two recessed surfaces 16 may be arcuately curved along respective ones of two imaginary circles V having the same diameter and centered on central axes C2 orthogonal to the axial direction and extending through the second slit 14. In the present modification, the two imaginary circles V are at the same position in the axial direction and at different positions in the circumferential direction. The two imaginary circles V may be at different positions in the axial direction and in the circumferential direction as long as the central axes C2 extend through the second slit 14. According to these configurations, by inserting into each second slit 14 a rod-shaped member 30 having the same cross-sectional shape as the second slit 14 and whose movement is restricted, each of the two recessed surfaces 16 becomes caught on the rod-shaped member 30 from the opposite sides in the axial direction. This restricts movement of the two opposing surfaces 15 toward the opposite sides in the axial direction. Accordingly, inserting the rod-shaped member 30 into each second slit 14 suppresses expansion and contraction of the spring 10 when the spring 10 is not in use.
- As shown in Fig. 15, the two recessed surfaces 16 may be arcuately curved along respective ones of two imaginary circles V having the same diameter and centered on central axes C2 orthogonal to the axial direction and extending through a first slit 13. In the present modification, the two imaginary circles V are at the same position in the axial direction and at different positions in the circumferential direction. The two imaginary circles V may be at different positions in the axial direction and in the circumferential direction as long as the central axes C2 extend through the same first slit 13. According to these configurations, by inserting into each second slit 14 a rod-shaped member 30 having the same cross-sectional shape as the second slit 14 and whose movement is restricted, each of the two recessed surfaces 16 becomes caught on the rod-shaped member 30 from one side in the axial direction. This restricts the two opposing surfaces 15, which move toward the opposite sides in the axial direction during expansion and contraction of the spring 10, from moving toward the rod-shaped member in the axial direction. Accordingly, inserting the rod-shaped member 30 into each second slit 14 suppresses expansion and contraction of the spring 10 when the spring 10 is not in use.
- As illustrated in Fig. 16, the two recessed surfaces 16 may be arcuately curved along respective ones of a first imaginary circle V1 and a second imaginary circle V2 having the same diameter. The first imaginary circle V1 is an imaginary circle centered on a central axis C2 orthogonal to the axial direction and extending through the first slit 13. The second imaginary circle V2 is an imaginary circle centered on a central axis C2 orthogonal to the axial direction and extending through the second slit 14. According to this configuration, by inserting into each second slit 14 a rod-shaped member 30 having the same cross-sectional shape as the second slit 14 and whose movement is restricted, the recessed surface 16 along the first imaginary circle V1 becomes caught on the rod-shaped member 30 from one side in the axial direction. Further, the recessed surface 16 along the second imaginary circle V2 becomes caught on the rod-shaped member 30 from the opposite sides in the axial direction. This restricts the recessed surface 16 along the first imaginary circle V1 from moving toward the rod-shaped member 30 in the axial direction. Also, the recessed surface 16 along the second imaginary circle V2 is restricted from moving toward the opposite sides in the axial direction. Accordingly, inserting the rod-shaped member 30 into each second slit 14 suppresses expansion and contraction of the spring 10 when the spring 10 is not in use.
- As shown in Fig. 17, the two recessed surfaces 16 may be arcuately curved along respective ones of two imaginary circles V having the same diameter and centered on central axes C2 orthogonal to the axial direction and extending through respective ones of the two first slits 13 connected to the second slit 14. According to the above configuration, by inserting into each of the second slits 14 a rod-shaped member 30 having the same cross-sectional shape as the second slit 14 and whose movement is restricted, the two recessed surfaces 16 become caught on the rod-shaped member 30 from the opposite sides in the axial direction. This restricts the two opposing surfaces 15, which move toward the opposite sides in the axial direction during contraction of the spring 10, from moving toward the rod-shaped member 30 in the axial direction. Accordingly, inserting the rod-shaped member 30 into each second slit 14 suppresses contraction of the spring 10 when the spring 10 is not in use.
- As illustrated in Fig. 18, each of the two opposing surfaces 15 may include a projecting surface 17. Each projecting surface 17 is continuous with the outer peripheral surface and the inner peripheral surface of the corresponding arcuate portion 23. The projecting surfaces 17 are arcuately curved. In the present modification, the second regions A2 are regions in which the distance between the two projecting surfaces 17 facing each other is a second distance d2 greater than the first distance d1. The first distance d1 is a distance between the most protruding parts of the two projecting surfaces 17. The second distance d2 is the distance between parts of the two projecting surfaces 17 other than the most protruding parts. The farther from the first region A1 in the axial direction, the greater the second distance d2 becomes. Fig. 18 shows the maximum second distances d2 for illustrative purposes. According to this configuration, by inserting into each second slit 14 a rod-shaped member 30 having the same cross-sectional shape as the second slit 14 and whose movement is restricted, each of the two projecting surfaces 17 becomes caught on the rod-shaped member 30 from the opposite sides in the axial direction. Accordingly, an advantage comparable to the advantage (1) is achieved.
- As illustrated in Fig. 19, one of the two opposing surfaces 15 may have a recessed surface 16, and the other of the two opposing surfaces 15 may have a projecting surface 17 opposing the recessed surface 16. The projecting surface 17 is continuous with the outer peripheral surface and the inner peripheral surface of the corresponding arcuate portion 23. The projecting surface 17 is arcuately curved. The curvature of the projecting surface 17 is the same as the curvature of the recessed surface 16. That is, the distance between the recessed surface 16 and the projecting surface 17 in the circumferential direction is constant over the entirety in the axial direction. According to this configuration, by inserting into each second slit 14 a rod-shaped member 30 having the same cross-sectional shape as the second slit 14 and whose restricted movement is restricted, the recessed surface 16 and the projecting surface 17 of the two opposing surfaces 15 become caught on the rod-shaped member 30 from the opposite sides in the axial direction. Accordingly, an advantage comparable to the advantage (1) is achieved.
- The slit groups 12 may be formed at intervals in the axial direction in a state in which the slit groups 12 are shifted by any angle toward one side in the circumferential direction.
- Each slit group 12 may have three or more first slits 13.
- Only a part of each opposing surface 15 may intersect the axial direction. In other words, as long as part of each opposing surface 15 intersects the axial direction, the other part may be a planar surface extending in the axial direction.
- The curvatures of the recessed surfaces 16 and the projecting surfaces 17 in the above-described embodiment and the respective modifications may be changed.
- The width of each first slit 13 and the width of each arcuate portion 23 may be changed. In this case, among multiple types of springs having different widths of the first slit 13 or different widths of the arcuate portion 23, the shape of the rod-shaped member 30 can be standardized by standardizing the shape of the opposing surface 15.
- The spring 10 does not necessarily need to be circular as viewed in the axial direction. For example, the spring 10 may have the peripheral wall 11 having a polygonal shape as viewed in the axial direction. Further, the spring 10 may have a frustoconical peripheral wall 11 in which the peripheral wall 11 becomes smaller toward one side in the axial direction.
- The spring 10 may be formed of a material different from a metal material, such as a resin material.

### REFERENCE SIGNS LIST

A1) First Region
A2) Second Region
C1) Central Axis
C2) Central Axis
d1) First Distance
d2) Second Distance
V) Imaginary Circle
V1) First Imaginary Circle
V2) Second Imaginary Circle
10) Spring
11) Peripheral Wall
12) Slit Group
13) First Slit
14) Second Slit
15) Opposing Surface
16) Recessed Surface
17) Projecting Surface
18) Inclined Surface
19) Inclined Surface
22) Leaf Spring Portion
23) Arcuate Portion
24) Connecting Portion
30) Rod-Shaped Member
110) Spring
111) Peripheral Wall
112) Slit Group
113) First Slit
114) Second Slit
115) Opposing Surface

## Claims

1. A spring, comprising an annular peripheral wall, wherein
the peripheral wall includes:
multiple slit groups formed at intervals in an axial direction of the peripheral wall, each of the slit groups including multiple first slits extending in a circumferential direction of the peripheral wall and formed at intervals in the circumferential direction;
multiple second slits each connecting corresponding first slits of two of the slit groups adjacent to each other in the axial direction, the second slits being formed at intervals in the circumferential direction; and
multiple pairs of opposing surfaces, the opposing surfaces of each pair facing each other across a corresponding one of the second slits in the circumferential direction, and
each of the opposing surfaces intersects the axial direction.

2. The spring according to claim 1, wherein
each of the opposing surfaces includes a recessed surface, and
each second slit includes:
a first region in which a distance between the two recessed surfaces facing each other is a first distance; and
second regions located on opposite sides of the first region in the axial direction, a distance between the two recessed surfaces in each of the second regions being a second distance less than the first distance.

3. The spring according to claim 2, wherein the recessed surfaces of each pair are arcuately curved along a same imaginary circle centered on a central axis that is orthogonal to the axial direction and extends through a corresponding one of the second slits.

4. The spring according to claim 1, wherein
each of the opposing surfaces includes a recessed surface, and
the recessed surfaces of each pair facing each other are arcuately curved along a same imaginary circle centered on a central axis that is orthogonal to the axial direction and extends through a corresponding one of the first slits.

5. The spring according to claim 2, wherein the recessed surfaces of each pair are arcuately curved along respective ones of two imaginary circles having a same diameter, each of the imaginary circles being centered on a central axis that is orthogonal to the axial direction and extends through a corresponding one of the second slits.

6. The spring according to claim 1, wherein
each of the opposing surfaces includes a recessed surface, and
the recessed surfaces of each pair facing each other are arcuately curved along respective ones of two imaginary circles having a same diameter, each of the imaginary circles being centered on a central axis that is orthogonal to the axial direction and extends through a corresponding one of the first slits.

7. The spring according to claim 1, wherein
each of the opposing surfaces includes a recessed surface, and
the facing recessed surfaces of each pair are arcuately curved respectively along a first imaginary circle and a second imaginary circle, the first imaginary circle being centered on a central axis that is orthogonal to the axial direction and extends through a corresponding one of the first slits, and the second imaginary circle having the same diameter as the first imaginary circle and being centered on a central axis that is orthogonal to the axial direction and extends through a corresponding one of the second slits.

8. The spring according to claim 1, wherein
each of the opposing surfaces includes a recessed surface, and
the recessed surfaces of each pair facing each other are arcuately curved along respective ones of two imaginary circles having a same diameter, the imaginary circles being respectively centered on central axes that are orthogonal to the axial direction and extend through two of the first slits connected to each other by a corresponding one of the second slits.

9. The spring according to claim 1, wherein
each of the opposing surfaces includes a projecting surface, and
each second slit includes:
a first region in which a distance between the two projecting surfaces facing each other is a first distance; and
second regions located on opposite sides of the first region in the axial direction, a distance between the two projecting surfaces in each of the second regions being a second distance greater than the first distance.

10. The spring according to claim 1, wherein
one of the opposing surfaces of each pair includes a recessed surface,
the other of the opposing surfaces includes a projecting surface facing the recessed surface, and
each second slit includes a region in which a distance between the recessed surface and the projecting surface facing each other is constant over an entirety of the region in the axial direction.
